# FASCICULE DE BREVET EUROPEEN

(11) **EP 0 360 665 B1**
(45) Date de publication et mention de la délivrance du brevet: **16.06.1993**
(21) Numéro de dépôt: 89402509.7
(22) Date de dépôt: 13.09.1989
(51) Int. Cl.: G21C 3/334

(54) **Dispositif de pose d'un manchon de blocage d'un tube-guide dans un embout démontable d'un assemblage combustible d'un réacteur nucléaire**
Vorrichtung zum Einsetzen von Führungsrohrblockierhülsen in ein Kopfstück eines zerlegbaren Kernreaktorbrennstabbündels
Device for inserting a guide thimble locking tube in a nozzle of a reconstituable nuclear reactor assembly

(30) Priorité: 19.09.1988 FR 8812203
(43) Date de publication de la demande: 28.03.1990
(73) Titulaire: FRAMATOME, 92400 Courbevoie (FR); COGEMA, F-78141 Velizy Villacoublay (FR)
(72) Inventeur: Guironnet, Louis, F-69009 Lyon (FR); Bline, Michel, F-69210 l'Arbresle (FR)
(74) Mandataire: Bouget, Lucien

(56) Documents cités:
- EP-A- 0 182 149
- EP-A- 0 187 651
- EP-A- 0 223 342

## Description

L'invention concerne un dispositif de pose d'un manchon de blocage d'un tube-guide, dans un embout démontable d'un assemblage combustible d'un réacteur nucléaire et en particulier d'un réacteur nucléaire à eau sous pression.

Les réacteurs nucléaires refroidis à l'eau et en particulier les réacteurs nucléaires à eau sous pression comportent des assemblages constitués par un faisceau de crayons combustibles de grande longueur disposés parallèlement les uns aux autres et maintenus dans une ossature formée par des tubes-guides, des entretoises et deux embouts d'extrémité. Les tubes-guides sont disposés dans la direction longitudinale de l'assemblage et sont reliés à des entretoises transversales régulièrement espacées suivant la longueur de l'assemblage.

Les tubes-guides sont également reliés à chacune de leurs extrémités à un embout constituant un élément de rigidification et de fermeture de l'assemblage.

Les crayons combustibles de l'assemblage constituent un faisceau dans lequel les crayons sont parallèles entre eux et disposés, dans les sections transversales de l'assemblage, suivant un réseau régulier déterminé par les entretoises. Certaines positions du réseau sont occupées par des tubes-guides qui sont généralement reliés de manière rigide aux entretoises.

Les tubes-guides ont une longueur supérieure à la longueur des crayons combustibles et sont placés dans le faisceau, de manière à comporter une partie saillante par rapport au faisceau de crayons combustibles à chacune de leurs extrémités. Les embouts sont fixés sur ces parties saillantes des tubes-guides de manière à assurer la fermeture de l'assemblage à chacune de ses extrémités.

Les crayons combustibles sont constitués par des pastilles frittées en matériau combustible nucléaire empilées à l'intérieur d'une gaine métallique isolant les pastilles du fluide entourant l'assemblage combustible. Dans le cas d'une rupture de gaine d'un crayon d'un assemblage combustible, il est nécessaire de remplacer très rapidement ce crayon pour éviter les fuites de produit radio-actif dans le fluide de refroidissement du réacteur. Pour accèder aux crayons combustibles et effectuer leur remplacement, il est nécessaire de démonter l'un des embouts de l'assemblage, ce qui suppose de supprimer les liaisons entre les extrémités correspondantes des tubes-guides et l'embout.

Les embouts comportent des trous traversants reproduisant le réseau des tubes-guides dans chacun desquels est engagé et fixé un tube-guide.

Dans la technique la plus courante, les tube-guides sont fixés de manière permanente sur les embouts, généralement par soudage, et il n'est pas possible de réaliser le démontage de l'embout pour effectuer le remplacement d'un crayon. Il est donc nécessaire, dans le cas d'une rupture de gaine sur un crayon, de remplacer l'assemblage combustible défectueux par un assemblage combustible neuf. L'assemblage combustible défectueux est démantelé et les crayons combustibles non défectueux mais fortement irradiés contenus dans cet assemblage sont récupérés et remontés dans une ossature d'assemblage combustible neuf. Pour réaliser ces opérations et manipulations d'éléments contaminés, il est nécessaire de prendre des précautions et d'opérer dans des installations complexes et coûteuses. La récupération des crayons combustibles non épuisés dans les assemblages défectueux est donc une opération très onéreuse.

On a donc conçu et mis au point de nouveaux assemblages combustibles comportant des tubes-guides dont la liaison avec l'un au moins des embouts d'extrémité est démontable.

L'assemblage est placé sous eau en position verticale, dans une piscine telle qu'une piscine de stockage d'assemblages combustibles dans laquelle on effectue le remplacement des crayons combustibles défectueux. Les tubes-guides de l'assemblage sont dans une position verticale, l'assemblage reposant sur le fond de la piscine par l'un des embouts ou embout inférieur. L'autre embout ou embout supérieur est accessible, sous une certaine hauteur d'eau, depuis le dessus de la piscine. Les parties des tubes-guides engagées dans l'embout supérieur de l'assemblage comportent une partie expansible radialement qui peut être, par exemple, rapportée à l'extrémité du tube-guide. Cette partie expansible radialement est constituée par une douille fendue présentant une partie saillant radialement qui est destinée à venir se loger dans une cavité de forme correspondante usinée à l'intérieur de l'embout, dans le trou de passage du tube-guide. Un manchon de blocage introduit à l'intérieur du tube-guide réalise l'expansion radiale de la douille fendue et l'accrochage du tube-guide.

Lorsqu'on effectue sous eau, dans une piscine, le démontage de l'embout supérieur puis le prélèvement et/ou le remplacement de certains crayons de l'assemblage, il est nécessaire de remettre en place l'embout supérieur et de réaliser sa fixation sur les tubes-guides de l'assemblage. Pour cela, il est nécessaire d'introduire et de fixer un manchon de blocage dans la partie supérieure de chacun des tubes-guides.

On a proposé, par exemple dans le EP-A-182.149 des dispositifs utilisés aussi bien pour la pose que pour l'extraction des manchons de blocage. De tels dispositifs comportent une douille tubulaire fendue, terminée par un bourrelet en saillie radiale dans laquelle on peut déplacer une tige terminée par une olive, pour actionner la douille fendue pour écarter les secteurs de la douille fendue. Un tel dispositif n'est pas totalement fiable et présente certaines difficultés d'utilisation.

On ne connaissait pas jusqu'ici d'outillage à la fois simple et efficace permettant d'effectuer la pose des manchons de blocage dans les tubes-guides d'un assemblage démontable.

Le but de l'invention est donc de proposer un dispositif de pose d'un manchon de blocage d'un tube-guide , dans un embout démontable d'un assemblage combustible d'un réacteur nucléaire à eau, l'assemblage constitué par un faisceau de crayons combustibles parallèles maintenus dans une ossature formée par des tubes-guides, des entretoises et deux embouts d'extrémité étant placé sous eau dans une piscine, chacun des tubes-guides en position verticale étant relié de manière démontable à l'embout d'extrémité situé au niveau supérieur de l'assemblage, grâce à une partie d'extrémité du tube-guide déformable radialement et logée dans un trou traversant l'embout supérieur comportant une partie d'accrochage en saillie radiale et recevant un manchon de blocage dans sa partie interne pour réaliser l'expansion radiale et l'accrochage du tube-guide, par sa partie d'accrochage dans un élargissement annulaire du trou de l'embout, ce dispositif de pose d'une structure simple et pouvant être mis en oeuvre de manière simple, rapide et sûre comportant :
- une perche fixée en position verticale à un moyen de manutention et de levage disposé au-dessus de la piscine comportant au moins une partie d'extrémité inférieure ou broche dont le diamètre est inférieur au diamètre intérieur du manchon de blocage,
- un moyen de retenue du manchon de blocage en position engagée sur la broche, associé à la broche,
- une portée d'appui transversale par rapport à l'axe de la broche susceptible de venir en appui sur une partie du manchon de blocage en position engagée sur la broche, et
- un moyen de déplacement vertical de la perche.

Dans ce but, le moyen de retenue du manchon de blocage est constitué par au moins un ressort à lame fixé sur la broche dans sa direction axiale, présentant une courbure convexe dirigée vers l'extérieur de la broche, de façon que le diamètre d'un cylindre imaginaire coaxial à la broche enveloppant le ressort soit supérieur au diamètre intérieur du manchon de blocage.

Afin de bien faire comprendre l'invention, on va maintenant décrire, à titre d'exemple non limitatifs, en se référant aux figures jointes en annexe, plusieurs modes de réalisation d'un dispositif de pose suivant l'invention utilisé pour le remontage d'embouts supérieurs d'assemblages combustibles de réacteurs nucléaire à eau légère.

La figure 1 est une vue en élévation d'un assemblage combustible d'un réacteur nucléaire à eau sous pression.

La figure 2 est une vue en élévation de l'ossature de l'assemblage représenté sur la figure 1.

La figure 3 est une vue en élévation avec coupe partielle de l'embout supérieur de l'assemblage combustible.

La figure 4 est une vue de dessus suivant 4 de l'embout supérieur représenté sur la figure 3.

La figure 5 est une vue en coupe axiale des éléments de fixation d'un tube-guide dans l'embout supérieur de l'assemblage.

La figure 6 est une vue en élévation de la partie d'extrémité du tube-guide assurant son accrochage dans l'embout supérieur.

La figure 7A est une vue en coupe d'un manchon de blocage suivant un premier mode de réalisation.

La figure 7B est une vue en coupe d'un manchon de blocage suivant un second mode de réalisation.

La figure 7C est une vue en coupe d'un manchon de blocage suivant un troisième mode de réalisation.

La figure 7D est une vue en coupe d'un manchon de blocage suivant une variante du troisième mode de réalisation.

La figure 8 est une vue en élévation et en coupe axiale d'un dispositif de pose suivant l'invention et suivant un premier mode de réalisation.

Les figures 9A, 9B et 9C sont des demi-vues en coupe axiale de la broche d'un dispositif de pose suivant l'invention.

La figure 10 est une vue en coupe d'un dispositif d'approvisionnement de tubes de blocage pour le dispositif de pose suivant l'invention.

La figure 11 est une vue de dessus suivant 11 de la figure 10.

La figure 12 est une vue en élévation et en coupe d'un dispositif de pose suivant l'invention et suivant un second mode de réalisation.

La figure 13 est une vue en élévation et en coupe axiale d'un dispositif de pose suivant l'invention et suivant un troisième mode de réalisation.

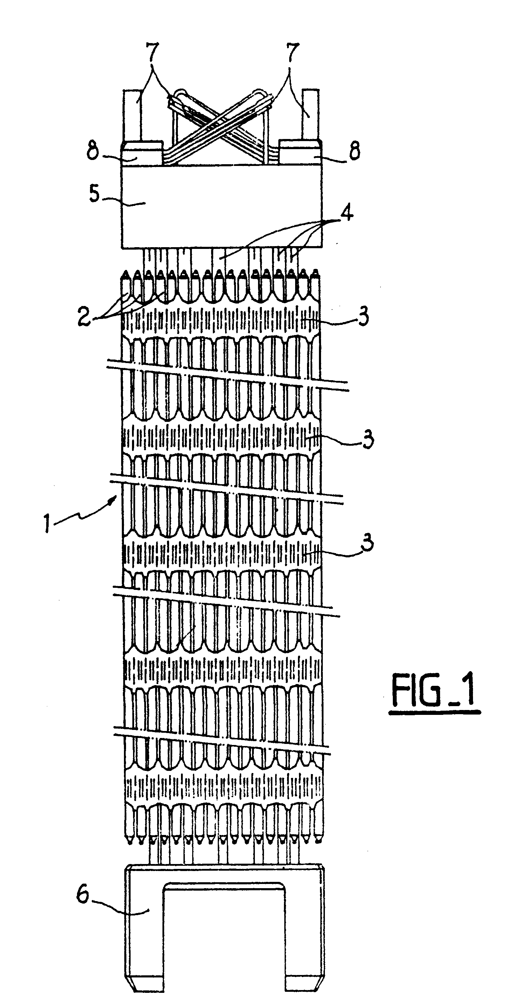

Sur la figure 1, on voit un assemblage combustible désigné de manière générale par le repère 1 et constitué par un faisceau de crayons combustibles parallèles 2 maintenus par des entretoises 3 disposées avec un certain espacement suivant la longueur des crayons 2. Les entretoises 3 sont constituées par des grilles dont les cellules reçoivent chacune un crayon combustible. Certaines positions du réseau des grilles sont occupées par des tubes-guides 4 dont la longueur est supérieure à la longueur des crayons combustibles 2.

Les tubes-guides 4 sont reliés à l'une de leurs extrémités à un embout 5 constituant l'embout supérieur de l'assemblage combustible et à leur autre extrémité à un second embout 6 constituant l'embout inférieur.

Dans sa position de service ou dans sa position de stockage, l'assemblage est placé verticalement comme représenté sur la figure 1.

Lorsque l'assemblage est en position de stockage sous eau dans une piscine, l'embout supérieur 5 est accessible depuis le dessus de la piscine. Cet embout supérieur 5 porte des ressorts à lame 7 assurant le maintien de l'assemblage dans le coeur du réacteur, la plaque supérieure de coeur venant reposer sur les ressorts 7. L'embout comporte également des plots 8 saillants par rapport à sa face supérieure.

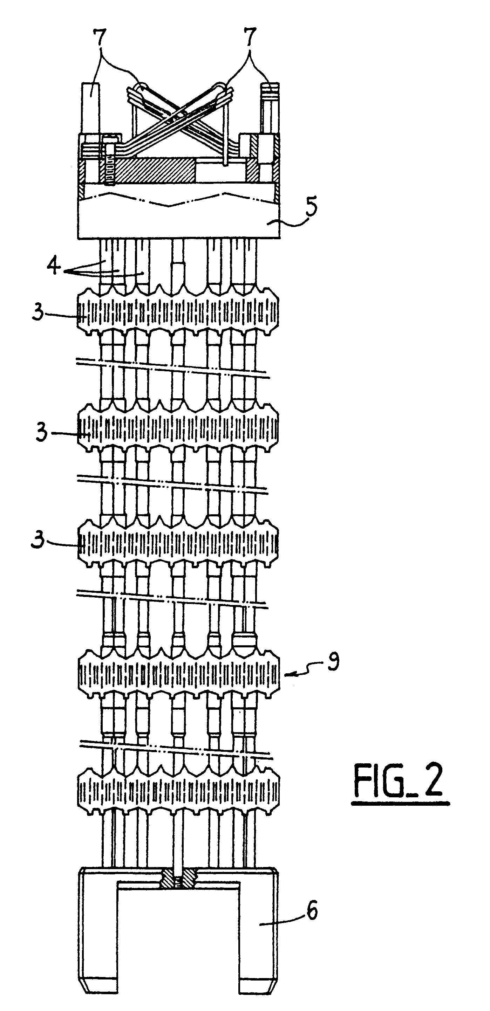

Sur la figure 2, on a représenté l'ossature 8 de l'assemblage combustible comportant les tubes-guides 4, des entretoises 3 et les embouts d'extrémité 5 et 6. Cette ossature 9 sert de logement aux crayons combustibles 2 du faisceau qui peuvent être introduits ou extraits de l'ossature, lorsque l'embout supérieur 5 est enlevé. Pour effectuer le remplacement ou le prélèvement de crayons, on prévoit des liaisons démontables entre l'extrémité des tubes-guides 4 et l'embout supérieur 5.

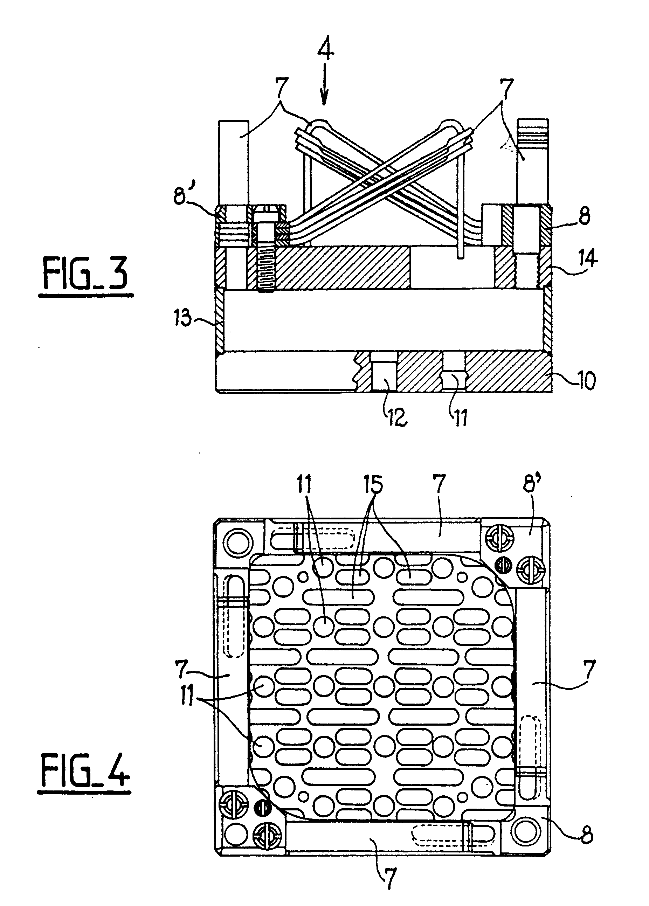

Sur les figures 3 et 4, on voit un embout supérieur d'un assemblage combustible comportant une plaque adaptatrice 10 dans laquelle viennent s'engager les tubes-guides, à l'intérieur d'ouvertures 11 traversant cette plaque adaptatrice et accessibles depuis la partie supérieure de l'assemblage combustible. Le tube-guide d'instrumentation de l'assemblage combustible situé en partie centrale est reçu dans une ouverture 12 de forme particulière. L'embout supérieur de l'assemblage est constitué par la plaque adaptatrice 10 et par un cadre 14 reliés entre eux par l'intermédiaire d'une jupe 13 soudée sur la plaque 10 et sur le cadre 14. Le cadre 14 porte les bossages 8 comportant les ouvertures de centrage et des brides 8' de maintien des ressorts 7.

Comme il est visible sur la figure 4, les trous de passage 11 permettant la fixation des tubes-guides 4 sont disposés dans des positions définies correspondant aux positions des vingt-quatre tubes-guides de l'assemblage. Des trous de passage d'eau 15 traversent la plaque adaptatrice 10 de l'embout entre les ouvertures de passage 11 des tubes-guides.

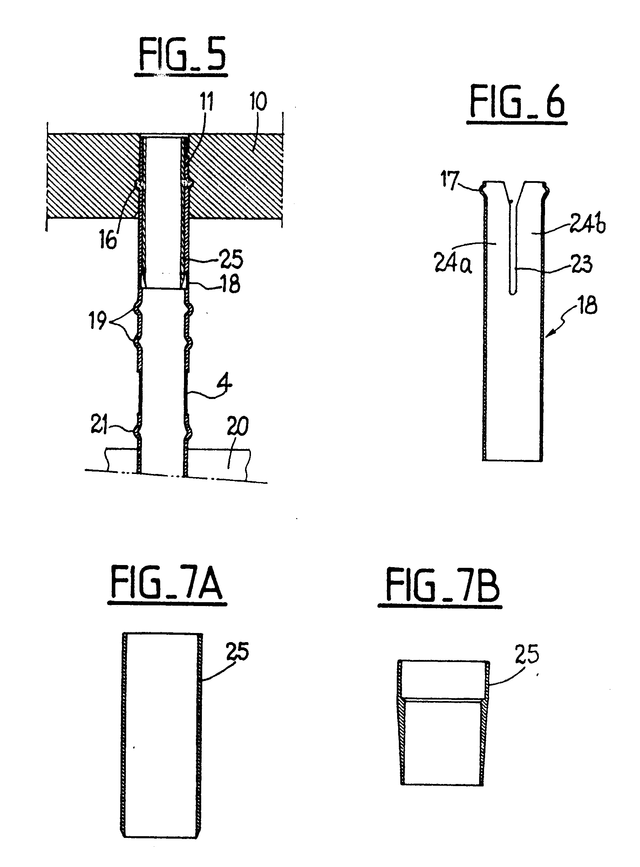

Comme il est visible sur la figure 5, les ouvertures traversantes 11 de la plaque adaptatrice 10 recevant les tubes-guides 4 comporte un élargissement annulaire 16 dans lequel vient se loger une saillie torique 17 prévue à l'extrémité supérieure du tube-guide 4.

Dans le mode de réalisation représenté sur les figures 5 et 6, la partie supérieure 18 du tube-guide 4 est constituée par un manchon rapporté à l'extrémité supérieure de ce tube-guide et fixée par des zones annulaires déformées 19 du manchon 18 et du tube-guide 4.

Un manchon 21 de traversée de la grille-entretoise supérieure 20 est également fixé sur le tube-guide par déformation annulaire de la paroi latérale du tube-guide et du manchon.

Le manchon 18 comporte deux fentes 23 diamétralement opposées et délimitant deux secteurs cylindriques 24a et 24b dans la paroi du manchon 18. Les deux secteurs cylindriques 24a et 24b qui comportent la saillie annulaire 17 au voisinage de leurs extrémités permettent une certaine expansion ou une certaine rétraction diamétrale de l'extrémité du manchon 18.

Pour assurer le montage du tube-guide, le manchon 18 est introduit dans une ouverture traversante 11 de la plaque adaptatrice 10 de manière à mettre en coïncidence les saillies annulaires 17 avec la partie élargie 16 de l'ouverture. Cette introduction peut être réalisée facilement grâce à la rétraction diamétrale des secteurs cylindriques élastiques 24a et 24b.

Le blocage en position du tube-guide est assuré par introduction d'un manchon de blocage 25 dans le manchon 18, par la face supérieure de la plaque adaptatrice 10. Le manchon de blocage 25 peut être par exemple de forme cylindrique comme représenté sur la figure 7A ou de forme légèrement tronconique comme représenté sur la figure 7B.

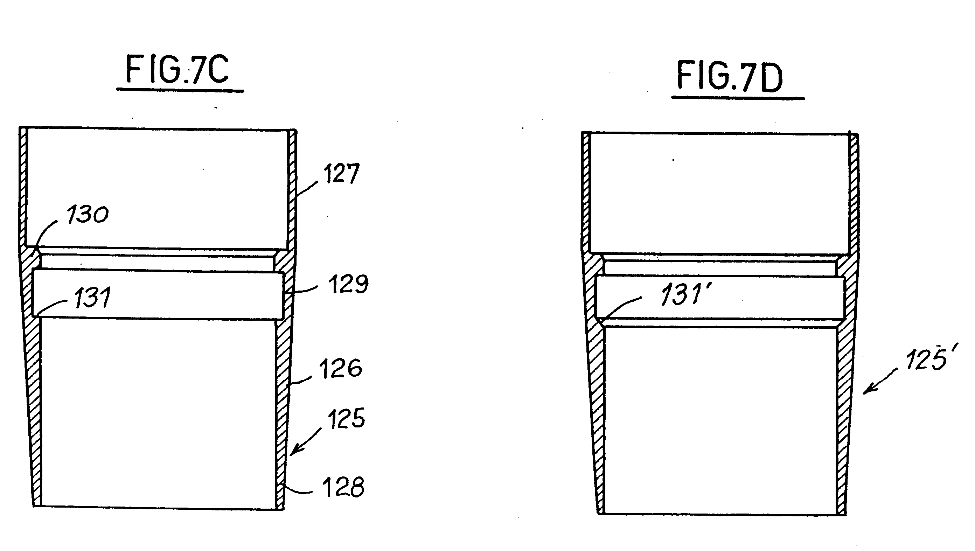

Sur les figures 7C et 7D, on a représenté un manchon de blocage 125 de forme extérieure cylindro-tronconique qui permet de réaliser le blocage en position d'un tube-guide, d'une manière sûre, par des opérations simples. Comme il sera indiqué plus loin, la mise en oeuvre de l'invention est également réalisée d'une manière avantageuse, lorsqu'on utilise un manchon de blocage 125 tel que représenté sur la figure 7C ou sur la figure 7D.

Le manchon de blocage 125 comporte une paroi tubulaire 126 en une seule pièce dont la surface externe présente une partie supérieure cylindrique et une partie inférieure tronconique reliées par la grande base de la partie tronconique.

L'épaisseur de la paroi 126 est variable suivant la hauteur de cette paroi. La partie supérieure 127 de la paroi constitue une virole de faible épaisseur. L'alésage intérieur de la partie inférieure 128 du manchon de blocage est de forme cylindrique, si bien que la paroi présente une épaisseur décroissante de haut en bas dans cette partie inférieure 128.

La partie 128 de la paroi comporte une gorge annulaire 129 au voisinage de son extrémité supérieure, dans sa partie de forte épaisseur.

La virole 127 est séparée de la partie tronconique 128 par un rebord 130 en saillie radiale vers l'intérieur du manchon. La gorge 129 est délimitée du côté opposé au rebord 130, c'est-à-dire vers le bas par un épaulement 131.

La gorge 129 peut être utilisée pour la mise en place du manchon de blocage 125 dans un tube-guide, en introduisant un outil de préhension dans la gorge 129, comme il sera expliqué plus loin. Une poussée axiale peut être exercée sur le manchon 125, par l'intermédiaire de l'épaulement 131, pour réaliser le blocage du tube-guide dont l'écartement est maintenu par la partie tronconique 128 engagée dans le tube-guide.

La virole 127 est alors située dans une partie de l'alésage de l'embout de l'assemblage qui n'est pas occupée par le tube-guide. Une ou plusieurs saignées radiales sont usinées dans cette partie de l'alésage de l'embout. Après blocage du tube-guide, la virole 127 est repoussée à l'intérieur des saignées radiales de l'alésage de l'embout dans lesquelles elle assure la fixation du manchon de blocage.

Sur la figure 7D, on a représenté une variante de réalisation du manchon de blocage de la figure 7C. Le manchon 125' est identique au manchon 125 mis à part le fait qu'il comporte un épaulement tronconique 131' à la place de l'épaulement plan 131 utilisé lors de la mise en place du manchon de blocage dans le tube-guide.

Cette opération de pose d'un manchon de blocage d'un tube-guide peut être réalisée sous eau dans une piscine où se trouve stocké l'assemblage combustible.

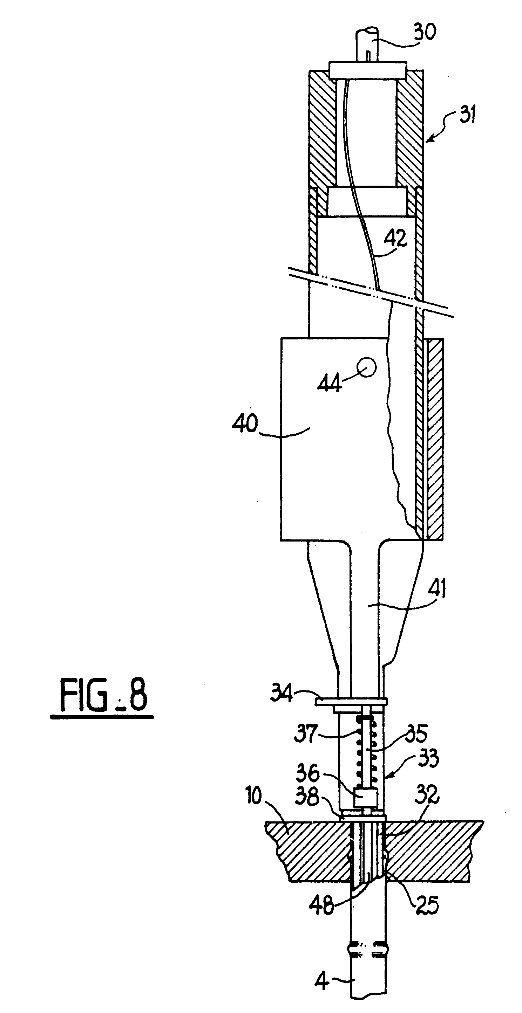

Suivant l'invention, on peut utiliser, pour la pose des manchons de blocage d'un assemblage combustible sous eau, un dispositif tel que représenté sur la figure 8 qui est suspendu par une anse de manutention 30 à un moyen de manutention et de levage disposé au-dessus de la piscine.

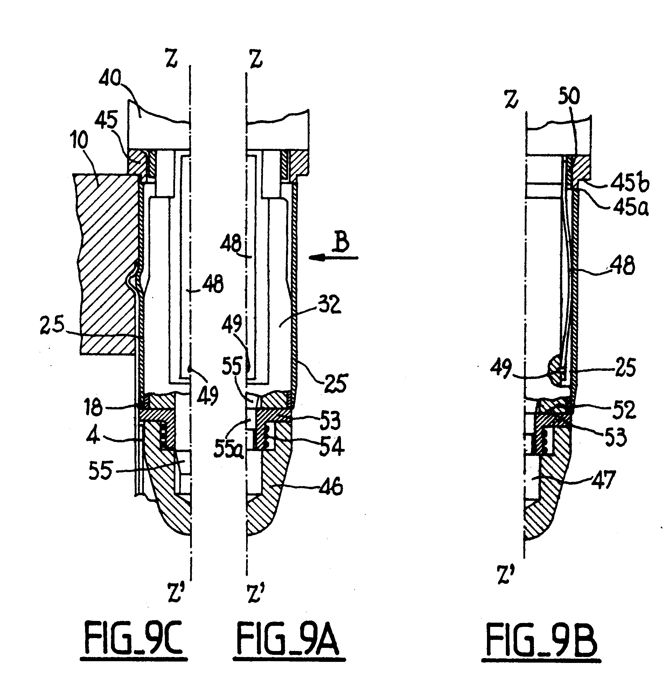

Le dispositif comporte principalement une perche tubulaire 31 dont la longueur peut être de l'ordre de quatre mètres. La perche 31 comporte une partie inférieure constituée par une pièce de forme tubulaire 32, ou broche, qui sera décrite de manière plus détaillée en se référant aux figures 9A, 9B et 9C. La broche 32 présente un diamètre extérieur légèrement inférieur au diamètre intérieur du manchon de blocage 25 du tube 4, dans la plaque adaptatrice 10 de l'embout supérieur de l'assemblage en cours de remontage.

Autour de la partie d'extrémité de la perche 31 sur laquelle est fixée la broche 32, est disposé un ensemble 33 d'éjection des manchons de blocage. Cet ensemble 33 comporte une plaque supérieure 34 montée coulissante sur l'extrémité de la perche 31 constituant un poussoir d'éjection sur lequel est fixé un ensemble de tiges 35 montées coulissantes dans une pièce de guidage 36 solidaire de la partie inférieure de la perche et rappelées en position haute par des ressorts 37 en appui sur la plaque 36.

L'extrémité des tiges 35 opposée à la plaque 34 est fixée à une platine d'éjection 38 montée coulissante sur la surface extérieure de la broche 32.

Dans le cas où le dispositif suivant l'invention est utilisé à la fois pour réaliser la pose et l'extraction des manchons de blocage, comme il sera expliqué plus loin, l'actionnement du poussoir 34 vers le bas permet d'éjecter un manchon de blocage qui vient d'être extrait d'un tube-guide et qui est resté enfilé sur la broche 32 de la perche, après levage de celle-ci.

De plus, le dispositif 33 permet de transmettre au manchon de blocage la poussée axiale nécessaire pour son introduction dans le tube-guide et de trouver un appui sur l'embout pour réaliser l'extraction de la broche du manchon de blocage en place dans le tube-guide.

La perche 31 est montée coulissante dans la direction axiale à l'intérieur d'un corps tubulaire 40 prolongé vers le bas par des jambes de force 41 en appui sur le poussoir 34 du dispositif d'éjection 33.

Un vérin hydraulique alimenté par une conduite 42 est relié d'une part au corps 40 par l'intermédiaire d'un axe horizontal 44 monté mobile axialement dans des lumières prévues dans la paroi de la perche 31 et d'autre part à la perche 31. Par exemple, la tige du vérin sera reliée à l'axe 44 et son corps fixé sur la perche 31.

L'alimentation du vérin permet de déplacer la perche 31 vers le haut par rapport au corps 40, depuis sa position représentée sur la figure 8, le corps 40 prenant appui par l'intermédiaire des jambes 41 et du dispositif 33, sur la face supérieure de la plaque adaptatrice 10.

On va maintenant se reporter aux figures 9A, 9B et 9C pour décrire la partie inférieure du dispositif de pose constituée par la broche 32.

Sur la figure 9A, la broche a été représentée avec un manchon de blocage 25 engagé sur sa surface externe, avant l'introduction du manchon 25 dans un tube-guide.

La figure 9B est une vue suivant B de la figure 9A.

Sur la figure 9C, la broche a été représentée après mise en place d'un manchon de blocage à l'intérieur d'un tube-guide.

De plus, sur les figures 9A, 9B et 9C, le dispositif représenté ne comporte pas d'ensemble d'éjection analogue à l'ensemble 33 représenté sur la figure 8. Le corps tubulaire 40 à l'intérieur duquel la perche 31 et la broche 32 sont montées coulissantes dans la direction axiale est solidaire, à sa partie inférieure, d'une pièce annulaire 45 constituant une cale de réglage comportant une première surface d'appui 45a destinée à venir en contact avec l'extrémité supérieure du manchon de blocage 25 et une seconde surface d'appui 45b destinée à venir en contact avec la face supérieure de la plaque adaptatrice 10 de l'embout de l'assemblage lors de la pose du manchon de blocage 25 (figure 9C).

La broche 32 comporte un corps tubulaire relié à sa partie inférieure à une pièce d'extrémité en ogive 46 permettant de faciliter l'introduction de la broche dans le trou traversant la plaque adaptatrice et dans la partie supérieure 18 du tube-guide, lors de la mise en place d'un manchon de blocage.

La partie courante de la broche 32 présente un diamètre inférieur au diamètre intérieur du manchon de blocage 25.

Comme il est visible sur l'ensemble des figures 9A, 9B et 9C, trois ressorts à lame 48 sont fixés sur la surface extérieure de la broche 32 dans sa partie courante et dans sa direction longitudinale. Les ressorts 48 sont fixés sur la surface périphérique de la broche 32, dans des positions situées à 120° les unes des autres, autour de l'axe ZZ' de la broche.

Chacune des lames de ressorts 48 est fixée dans une échancrure usinée dans la surface périphérique de la broche 32 et fixée à sa partie inférieure sur la broche 32 par un point de soudure 49. La partie supérieure de chacune des lames 48 est fixée contre la surface de la broche 32 par l'intermédiaire d'une bague 50 dont la position, suivant l'axe de la broche, est réglable. Comme il est visible sur la figure 9B, les lames de ressorts 48 ont une forme courbe et tournent leur partie convexe vers l'extérieur. La courbure des lames 48 peut être réglée en déplaçant la bague 50.

Cette courbure sera choisie de manière telle que le cylindre d'axe ZZ' enveloppant les trois lames 48 présente un diamètre légèrement supérieur au diamètre intérieur du manchon de blocage 25.

De cette manière, lorsqu'on engage un manchon 25 sur la broche 32 jusqu'au moment où son extrémité supérieure vient en contact avec la surface d'appui 45a de la pièce annulaire 45, on produit une légère flexion des lames de ressort 48 qui, par élasticité, assurent un centrage et un certain maintien du manchon sur la broche 32.

La broche représentée sur les figures 9A, 9B et 9C comporte de plus à sa partie inférieure des ouvertures radiales 52 communiquant avec l'alésage central 47 de la broche et débouchant sur la surface extérieure de cette broche 32.

Dans chacune des ouvertures radiales 52 est montée une griffe d'accrochage 53. Les trois griffes 53 sont maintenues dans une position rétractée à l'intérieur de l'ouverture radiale correspondante 52, par un dispositif élastique constitué par des ressorts 54.

Une tige d'actionnement 55 est montée coulissante à l'intérieur de l'alésage 47 et comporte, à son extrémité inférieure, une partie 55a dont le diamètre est inférieur au diamètre de la partie courante de la tige 55.

La tige 55 peut être déplacée entre une position où sa partie inférieure 55a est en contact avec la surface intérieure des griffes d'accrochage 53 et une position abaissée où la partie courante de la tige 55 est en contact avec cette partie intérieure des griffes 53.

Dans la première position de la tige d'actionnement, les griffes 53 sont en position rétractée à l'intérieur des ouvertures 52, leur extrémité extérieure se trouvant à l'intérieur du contour interne du manchon 25.

Au contraire, dans la seconde position de la tige 55, les griffes 53 sont extraites et leur extrémité extérieure vient en-dessous du manchon de blocage 25 engagé sur la broche 32 et en butée sur la surface d'appui 45a.

La tige de manoeuvre 55 peut être actionnée depuis la partie supérieure de la perche située au niveau supérieur de la piscine.

Cet ensemble comportant les griffes d'extraction et leur moyen de manoeuvre est principalement utilisé pour l'extraction des manchons de blocage, ainsi qu'il est expliqué dans une demande de brevet de la Société FRAMATOME déposée le même jour que la présente demande.

Dans le cas d'un dispositif de pose des manchons de blocage, les griffes d'accrochage ne sont pas nécessaires, la retenue du manchon de blocage 25 dans sa position représentée pouvant être assurée par les seuls ressorts 48.

On peut cependant concevoir un outil polyvalent assurant à la fois la pose et l'extraction des manchons de blocage. Dans ce cas, les griffes d'accrochage 53 peuvent servir au maintien du manchon, en même temps que les ressorts 48 ou indépendamment de ceux-ci.

Dans le cas d'un manchon de blocage 125 ou 125' tel que représenté sur la figure 7C ou la figure 7D, la conception de la broche 32 et la position de la pièce annulaire 45 sont prévues de manière que les griffes 53 viennent se placer au niveau de la gorge 129 lorsque la broche est engagée dans le manchon de blocage, les griffes 33 étant en position rétractée. Dans ce cas, le maintien du manchon pourra être assuré par les griffes 53 uniquement, ces griffes étant extraites et engagées dans la gorge de préhension 129.

Pour effectuer la mise en place d'un manchon de blocage 25 dans un tube-guide 4 dont l'extrémité 18 est introduite dans un alésage d'une plaque adaptatrice 10 d'un embout supérieur d'assemblage combustible, en utilisant un dispositif tel que représenté sur la figure 8 ou les figures 9A à 9C, on engage le manchon de blocage 25 sur la broche 32, jusqu'au moment où l'extrémité supérieure du manchon vient en butée sur la surface d'appui 45a de la cale de réglage 45.

Dans le cas d'un dispositif polyvalent permettant la pose et l'extraction de manchons grâce à des griffes d'accrochage, ces griffes d'accrochage doivent être dans leur position rétractée, dans cette première phase. Cette première phase peut être effectuée au-dessus de la piscine, la perche étant remontée grâce au treuil du pont roulant assurant sa suspension, de manière que sa partie inférieure soit accessible pour un opérateur.

La perche est ensuite descendue dans la piscine jusqu'au niveau de l'embout supérieur de l'assemblage dont on réalise le remontage. La position de la perche et de la broche 32 est alors réglée et contrôlée par une caméra vidéo de façon à aligner l'axe ZZ' de la broche avec l'axe du tube-guide 4 dont on réalise la fixation.

Le manchon de blocage 25 est introduit dans l'alésage de la plaque adaptatrice 10 et dans la partie supérieure 18 du tube-guide, puis poussé et mis en place par l'intermédiaire d'une pièce d'appui qui peut être constituée par la plaque d'éjection 38 (figure 8) ou par la cale de réglage 45 (cas de la figure 9C).

Dans le cas d'un manchon de blocage 125 ou 125' tel que représenté sur les figures 7C et 7D, la poussée sera avantageusement effectuée par l'intermédiaire des griffes 53 de la broche 32 en position extraite et venant en appui sur l'épaulement 131 ou 131' de la gorge 129 du manchon, une poussée étant assurée sur la perche.

Dans le cas où la poussée se fait par l'intermédiaire d'un ensemble d'éjection 33, la plaque de poussée peut également venir en contact avec l'extrémité supérieure du manchon de blocage, par l'intermédiaire d'un anneau de réglage tel que l'anneau 45.

Comme il est visible sur la figure 9C, la surface d'appui 45b de l'anneau de réglage 45 vient en contact avec la surface supérieure de la plaque adaptatrice 10, ce qui détermine l'arrêt du mouvement de descente de la perche pour réaliser la pose du manchon 25 qui est alors parfaitement en place dans le tube de guidage.

L'anneau de réglage 45 permet donc de transmettre la poussée au manchon de blocage 25 et d'assurer sa mise en place précise dans la direction axiale à l'intérieur du tube de guidage.

Il est à remarquer que l'anneau de réglage et l'ensemble d'éjection sont fixés sur le corps 40 dans lequel la perche est montée coulissante. Pendant la mise en place du manchon, la perche et le corps tubulaire 40 sont bloqués en position axiale l'un par rapport à l'autre et la poussée axiale de la perche peut être transmise au manchon de blocage pour son insertion dans le tube de guidage.

Après la mise en place du manchon, le vérin est alimenté, ce qui provoque la remontée de la perche, le corps tubulaire 40 étant en appui sur l'embout supérieur de l'assemblage. Le déplacement de la perche est suffisant pour extraire totalement la broche 32 du manchon de blocage qui est maintenu dans l'alésage de la plaque adaptatrice et dans le tube-guide par l'anneau 45. L'extraction est obtenue sans difficulté, dans la mesure où les ressorts à lame élastique 48 n'exercent qu'une force limitée sur la paroi intérieure du manchon de blocage.

Il est à remarquer que lorsqu'on utilise un dispositif polyvalent comportant à la fois des griffes d'accrochage et des ressorts, les griffes d'accrochage doivent être en position rétractée lors de la remontée de la perche.

L'anneau de réglage 45 qui peut être éventuellement placé sous la plaque d'éjection de l'ensemble 33 assure, en plus de son rôle lors de la mise en place du manchon, la retenue de ce manchon lors de la remontée de la perche. En outre, dans le cas d'un dispositif polyvalent de pose et d'extraction, l'anneau de réglage 45 assure le réglage de la position axiale du manchon sur la broche 32, de manière que les griffes d'accrochage 53 puissent venir juste en-dessous de l'extrémité inférieure du manchon 25 ou à l'intérieur de la gorge 129 du manchon 125 ou 125', lors de leur extraction.

Les dispositifs qui ont été décrits ci-dessus utilisent une perche montée coulissante à l'intérieur d'un corps tubulaire permettant un déplacement limité de la perche pour réaliser l'extraction de la broche après la mise en place du manchon de blocage. Dans le cas de l'utilisation de ressorts élastiques pour assurer le maintien du manchon de blocage sur la broche, il est possible d'éviter l'utilisation d'un tel montage coulissant de la perche. Un tel dispositif simplifié comportera une simple perche monobloc portant à son extrémité inférieure la broche 32 munie de ressorts à lame et un anneau de réglage analogue à l'anneau 45 constituant une surface d'appui pour l'extrémité supérieure du manchon de blocage et une surface d'appui sur l'embout supérieur de l'assemblage pour assurer une mise en place correcte du manchon de blocage. Cette mise en place est assurée par simple pousée par l'intermédiaire de la perche jusqu'au moment où l'anneau de réglage vient en appui sur l'embout de l'assemblage.

La perche est ensuite remontée, ce qui assure l'extraction de la broche 32 du manchon de blocage, sans déplacement de ce manchon bien qu'aucune pièce n'assure sa retenue. En effet, le manchon de blocage est introduit en force dans le tube-guide et s'y trouve maintenu solidement par les forces élastiques radiales exercées par le tube-guide. A l'inverse, les ressorts élastiques 48 n'exercent que des forces limitées sur la paroi intérieure du manchon de blocage, si bien que l'extraction de la broche peut être réalisée sans déplacer le manchon.

Pour chacun des assemblages combustibles dont on réalise le remontage de l'embout supérieur, il est nécessaire d'effectuer la pose de vingt-quatre manchons de blocage insérés chacun dans un des vingt-quatre tubes-guides de l'assemblage.

Dans le cas où la perche doit être remontée après chacune des opérations de pose d'un manchon pour équiper la broche d'un nouveau manchon de blocage, les opérations de remontage d'un assemblage nécessitent de nombreuses manoeuvres et un temps très long.

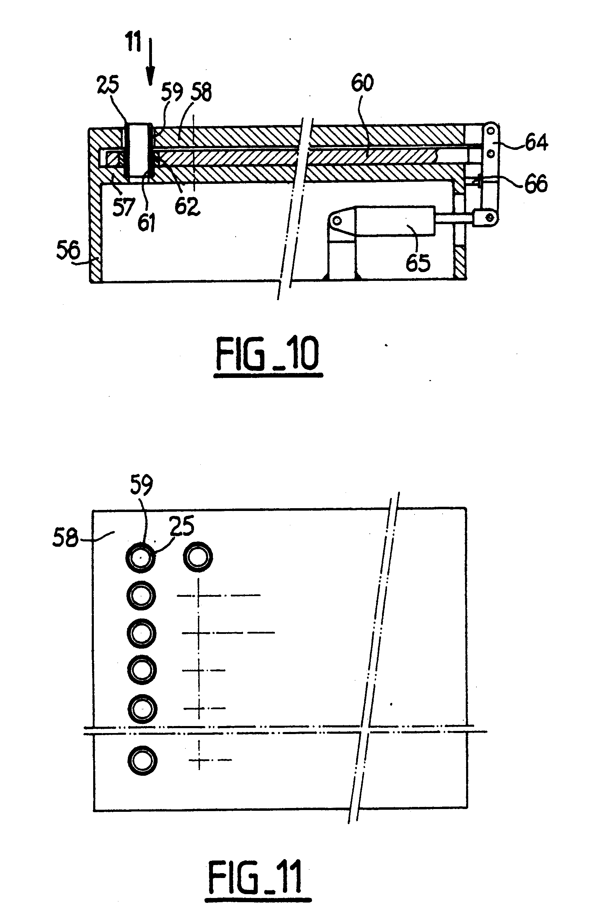

Le dispositif d'approvisionnement des manchons de blocage représenté sur les figures 10 et 11 permet d'éviter de nombreuses manoeuvres. Ce dispositif peut être placé dans la piscine à proximité de l'assemblage dont on effectue le remontage. Le dispositif d'approvisionnement comporte un bâti parallélépipédique 56 fermé à sa partie supérieure par une plaque 57 elle-même solidaire d'une seconde plaque 58 placée en parallèle et à l'aplomb de la plaque 57 et rigidement solidaire de celle-ci.

La plaque 58 est percée d'ouvertures traversantes 59 dont le diamètre est sensiblement supérieur au diamètre extérieur des manchons de blocage 25.

La plaque 57 est percée d'un ensemble de trous borgnes 61 situés chacun à l'aplomb d'un trou 59 de la plaque 58.

Une troisième plaque 60 est montée libre entre les plaques 57 et 58 et comporte un réseau de trous traversants analogues au réseau des trous 59 de la plaque 58. Dans chacun des trous 62 de la plaque 60, est fixé un manchon de caoutchouc dont le diamètre intérieur est très légèrement supérieur au diamètre du manchon de blocage 25.

Une biellette 64 est fixée de manière articulée suivant l'un des bords de la plaque 58 et suivant le bord correspondant de la plaque 60, au niveau de chapes usinées dans ces plaques. La biellette 64 est de plus articulée à son extrémité opposée aux plaques 58 et 60, à la tige d'un vérin 65 fixé sur le bâti 56. Entre ses deux parties d'extrémité articulées, la biellette est en appui sur une butée 66 solidaire du bâti 56.

Le vérin 65 permet de déplacer par effet de levier, par l'intermédiaire de la bielle 64, la plaque 60 parallèlement aux plaques 57 et 58.

Lors du remplissage du dispositif d'approvisionnement en manchons de blocage 25, ces manchons sont disposés dans les ouvertures 59 et 62 en coïncidence et viennent reposer sur le fond du trou borgne 61 correspondant.

Lorsqu'on a garni l'ensemble des positions du dispositif d'approvisionnement avec des manchons de blocage, on réalise le serrage de ces manchons en alimentant le vérin 65, ce qui provoque un déplacement de la plaque 60 et un serrage des manchons 25 dans les ouvertures 59 et 61, par l'intermédiaire des manchons de caoutchouc garnissant les ouvertures 62 et évitant d'endommager les manchons lors de leur serrage.

Le dispositif d'approvisionnement peut être mis en place à l'endroit voulu avec son ensemble de manchons 25.

La pression du vérin 65 est relâchée si bien que le manchon 25 est libre dans les ouvertures 59, 61 et 62 dont le diamètre est sensiblement supérieur au diamètre du manchon 25.

Le prélèvement d'un manchon 25 par le dispositif de pose peut être réalisé en introduisant la broche 32 dans le manchon reposant sur la plaque 57 du bâti 56. Le manchon 25 est alors maintenu sur la broche 32 par l'intermédiaire des ressorts 48. La perche peut être levée et le manchon 25 transporté vers le tube-guide dont on assure le blocage. L'opération peut être réalisée pour chacun des tubes-guides dont on assure la fixation ; la capacité du dispositif d'approvisionnement est suffisante pour assurer la fourniture des manchons de blocage des tubes-guides de plusieurs assemblages.

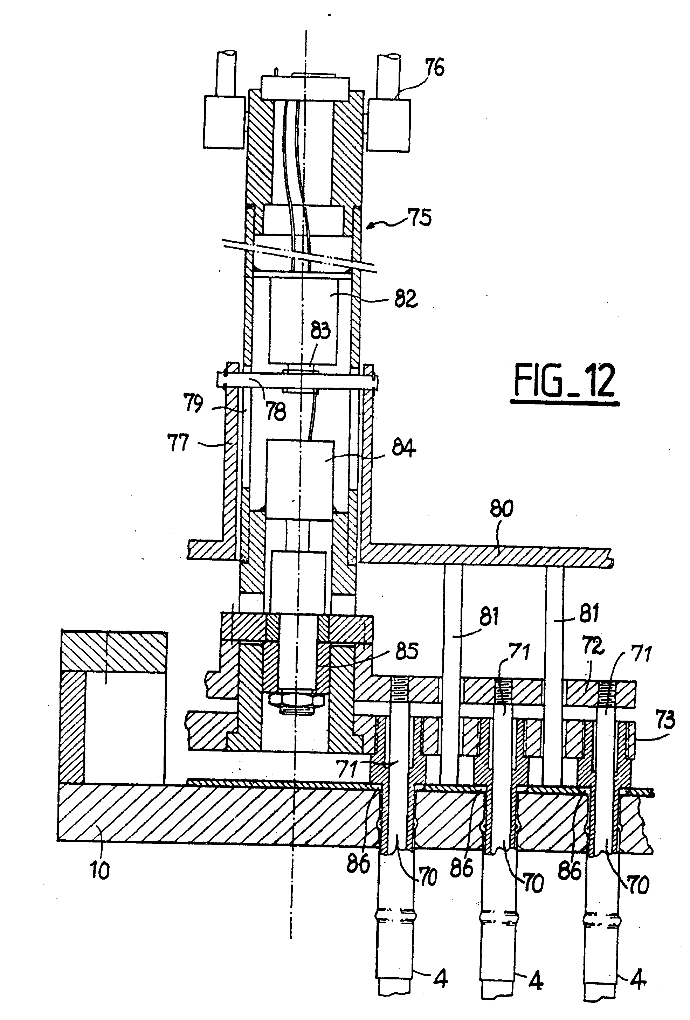

Sur la figure 12, on a représenté un dispositif permettant de réaliser en une seule opération la pose des manchons de blocage de l'ensemble des tubes-guides d'un assemblage combustible.

Le dispositif d'extraction, appelé dispositif multibroche, comporte une pluralité de broches 70 qui sont chacune constituées de la même manière que la broche 32 représentée sur les figures 9A, 9B et 9C.

Toutefois, ces broches 70 pourront comporter uniquement des ressorts à lame 48 ou uniquement des griffes d'accrochage 53 pour assurer le maintien des manchons de blocage sur les broches 70, avant leur pose dans les tubes-guides de l'assemblage.

Dans le cas où les broches 70 comportent des griffes d'accrochage, celles-ci peuvent être mises en position d'extraction par déplacement vers le bas de tiges 71 qui sont fixées, à leur partie supérieure, sur une plaque 72 permettant le déplacement simultané de l'ensemble des tiges 71.

Les broches 70 sont elles-mêmes fixées sur une plaque 73 rigidement solidaire de l'extrémité inférieure d'une perche 75 comportant une anse de manutention 76 permettant de la relier au treuil d'un pont de manutention de la piscine dans laquelle est placé l'assemblage combustible.

La perche 75 comporte une partie inférieure 77 montée de façon télescopique par l'intermédiaire d'un axe 78 disposé à l'intérieur de lumières 79, sur la partie supérieure tubulaire de la perche. La partie 77 comporte une plaque 80 sur laquelle sont fixées des jambes d'appui 81 traversant avec jeu les plaques 72 et 73 pour venir en appui sur la plaque adaptatrice 10 de l'assemblage.

Un vérin 82 est fixé sur la partie supérieure de la perche 75 et comporte une tige reliée par l'intermédiaire d'une chape 83 à l'axe 78 de la partie inférieure télescopique 77.

Un second vérin 84 est également fixé sur la partie supérieure de la perche et comporte une tige reliée à la plaque 72 de déplacement des tiges 71 et à un manchon de guidage 85 monté glissant dans l'alésage de la partie inférieure de la perche 75.

Chacune des vingt-quatre broches du dispositif de pose représenté sur la figure 12 peut être équipée d'un manchon de blocage en venant placer l'outillage au-dessus d'un dispositif d'approvisionnement tel que représenté sur les figures 10 et 11. On peut garnir l'ensemble des broches du dispositif multibroche en une seule opération, si les ouvertures de réception des manchons 25 sur le dispositif d'approvisionnement sont placées suivant une disposition reproduisant la disposition transversale des tubes-guides dans un assemblage. On peut également prévoir un dispositif d'approvisionnement comportant plusieurs ensembles d'ouvertures correspondant chacun, quant à leurs positions sur les plaques 57, 58 et 60, à la disposition transversale des tubes-guides dans un assemblage. Les manchons viennent un butée, par leur extrémité supérieure, sur l'anneau de réglage 86 disposé à la partie supérieure de la broche 70.

Le maintien des manchons peut être réalisé soit par des ressorts à lame fixés sur les broches, soit par des griffes d'accrochage, soit encore par des ressorts et des griffes.

Dans le cas où les broches 70 comportent des griffes d'accrochage, celles-ci peuvent être manoeuvrées dans leur ensemble par déplacement de la plaque 72, par l'intermédiaire du vérin 84.

Le dispositif est descendu dans la piscine au-dessus de l'assemblage combustible dont on effectue le remontage puis mis en position précise de façon que chacune des broches 70 se trouve dans l'alignement d'un tube-guide 4. Cette mise en place précise peut être contrôlée grâce à une caméra vidéo.

Les broches 70 sur lesquelles sont engagés les manchons de blocage 25 sont introduites dans les tubes 4 correspondants et les manchons 25 sont mis en place par poussée, par l'intermédiaire de la perche 75. La profondeur d'insertion des manchons de blocage est parfaitement déterminée grâce aux anneaux de réglage 86 venant en appui sur la face supérieure de la plaque adaptatrice 10, pour réaliser la mise en butée de la perche 75 lorsque les manchons sont mis en place.

Dans le cas où le dispositif comporte des griffes d'accrochage, celles-ci sont mises en position de retrait en alimentant le vérin 84 pour assurer la remontée des tiges 71.

Dans le cas où le maintien des manchons est assuré uniquement par des ressorts à lame, l'extraction des broches peut être effectuée sans opération préalable.

On alimente le vérin 82 de manière à exercer une poussée sur la partie inférieure 77 de la perche qui est en appui sur l'embout supérieur de l'assemblage. On provoque ainsi la remontée de la perche par réaction et l'extraction des broches, les manchons de blocage restant en position dans les tubes-guides correspondants.

Dans le cas de l'utilisation de griffes d'accrochage, le retrait de ces griffes permet de supprimer la liaison entre le manchon de blocage et la broche correspondante et, dans le cas de l'utilisation de ressorts, l'élasticité de ces ressorts permet l'extraction de la broche sans déplacer le manchon de blocage.

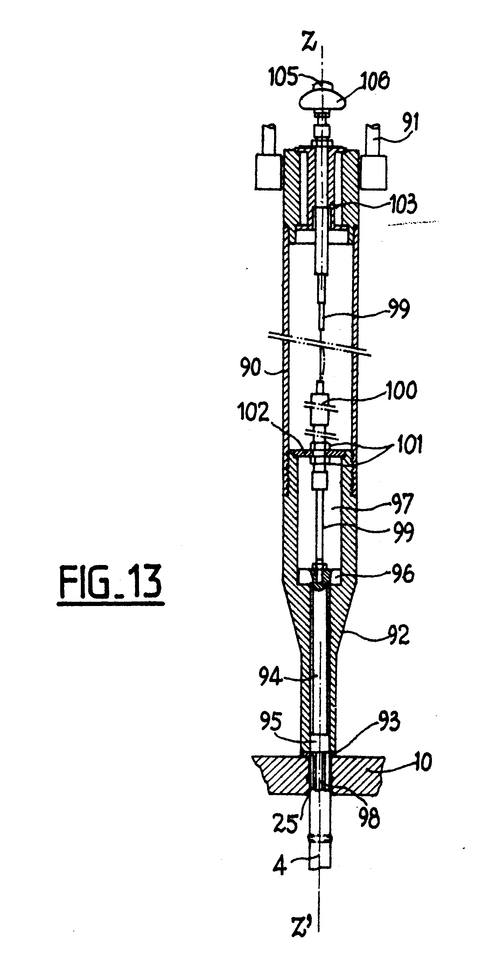

Sur la figure 13, on voit un dispositif de pose de manchons de blocage de tubes-guides d'assemblages d'une structure simple et dont le fonctionnement entièrement manuel ne nécessite pas d'apport extérieur d'énergie.

Le dispositif est représenté, pendant une opération de pose d'un manchon de blocage 25 dans un tube-guide 4, à l'intérieur de la plaque adaptatrice 10 d'un assemblage combustible.

Le dispositif est constitué par une perche de forme tubulaire 90 suspendue à sa partie supérieure, par l'intermédiaire d'un anneau de levage 91, au treuil d'un pont roulant se déplaçant au-dessus de la piscine du combustible dans laquelle est stocké l'assemblage combustible.

Le perche 90 comporte un embout inférieur à diamètre réduit 92 portant à son extrémité un anneau de réglage de profondeur d'insertion 93.

Dans l'alésage de l'embout 92 est montée coulissante une broche 94 grâce à un cylindre de guidage 95 monté sans jeu et à frottement doux dans l'alésage de l'embout.

La broche 94 comporte, à sa partie inférieure, en-dessous du cylindre 95, une partie d'extrémité dont le diamètre est inférieur au diamètre intérieur d'un manchon de blocage 25. Sur cette partie inférieure de la broche sont fixées trois lames de ressorts courbes 98, analogues aux lames de ressorts 48 décrites et représentées sur les figures 9A, 9B et 9C.

La partie inférieure de la broche 94 présente une forme d'ogive facilitant l'introduction de la broche au moment de la pose d'un manchon de blocage 25 dans un tube-guide 4.

La partie supérieure de la broche, au-dessus du cylindre 95 est constituée par une tige dont le diamètre est sensiblement inférieur au diamètre de l'alésage de l'embout 92 qui est solidaire, à sa partie supérieure d'une tête de guidage 96 montée à frottement doux dans un alésage 97 à l'intérieur de la partie à grand diamètre de la perche 90.

La tête de guidage 96 est reliée à la tige de commande 99 d'un dispositif de déplacement actionné à distance de manière manuelle.

Le dispositif du type télécommande à billes comporte une gaine 100 fixée à sa partie inférieure sur une platine 102 solidaire de la perche 90, par l'intermédiaire d'écrous 101. La gaine 100 est également fixée sur la perche à sa partie supérieure, par l'intermédiaire d'un ensemble à douille 103. La tige de commande 99 est montée coulissante à l'intérieur de la gaine 100 et comporte une partie inférieure à l'extérieur de la gaine reliée à la tête 96.

La partie supérieure de la tige 99 est reliée à un bouton de commande 105 et à une poignée de commande 106 à vis micrométrique. Le bouton 105 et la poignée 106 sont montés sur l'ensemble à douille 103 à l'extrémité supérieure de la perche.

Par poussée sur le bouton 105, on obtient un déplacement de la tige 99 et de la broche dans le sens de la descente, sur une distance au moins égale à la longueur de la partie inférieure de la broche 94 en-dessous du cylindre 95. Ce déplacement permet de faire passer l'extrémité inférieure de la broche comportant les lames de ressorts 98 d'une position rétractée à l'intérieur de l'embout 92, à une position entièrement extraite telle que représentée sur la figure 13. Par traction sur le bouton 105, on obtient le déplacement inverse.

La poignée 106 permet d'obtenir des déplacements limités et contrôlés de la broche 94 dans un sens et dans l'autre.

On va maintenant décrire l'utilisation du dispositif représenté sur la figure 13 pour la mise en place d'un manchon de blocage dans un tube-guide 4 d'un assemblage combustible, à l'intérieur de la plaque adaptatrice 10 de l'embout supérieur de l'assemblage.

Dans un premier temps, la perche 90 est déplacée grâce au treuil de suspension de manière que sa partie inférieure se trouve au-dessus d'un dispositif d'approvisionnement en manchons tel que représenté sur les figures 10 et 11, et situé à proximité de l'embout de l'assemblage dont on effectue le remontage. La broche 94 est placée dans sa position extraite telle que représentée sur la figure 13. On engage la broche 94 dans un manchon de blocage 25 disposé libre dans le dispositif d'approvisionnement dont la plaque 60 est dans sa position desserrée. Le manchon est retenu par les lames de ressorts élastiques 98. Le manchon 25, en position sur la broche 94, vient en butée sur l'anneau de réglage 93.

La perche est relevée légèrement pour réaliser le prélèvement du manchon puis placée dans l'alignement axial du tube 4. La broche 94 est introduite dans le trou traversant la plaque 10 et dans le tube-guide en transmettant à la broche 94 une poussée par l'intermédiaire de la perche. L'anneau de réglage 93 venant en butée sur la face supérieure de la plaque adaptatrice 10 après engagement du manchon définit la position finale de la broche. Le manchon de blocage est alors parfaitement en place dans le tube et réalise le blocage de ce tube 4 à l'intérieur de la plaque 10. On exerce alors une traction sur le bouton 105, ce qui provoque la remontée de la broche 94 à l'intérieur de l'embout 92, la partie saillante comportant les ressorts 98 se trouvant totalement effacée à l'intérieur de l'alésage de l'embout 92. Le manchon de blocage 25 ne subit aucun déplacement lors de la remontée de la broche 94, sa retenue axiale étant assurée par l'anneau de réglage 93. De plus, le manchon 25 est bloqué à l'intérieur du tube-guide.

On peut également utiliser le dispositif de déplacement télécommandé manuellement pour introduire le manchon de blocage dans le tube-guide, par un déplacement vers le bas commandé par poussée sur le bouton 105. La broche est déplacée vers le bas par poussée sur le bouton 105, sa partie inférieure venant dans sa position saillante à l'extrémité de l'embout 92. Il est alors possible de placer comme précédemment un manchon de blocage sur l'extrémité de la broche 94 pour effectuer une nouvelle opération de pose d'un manchon dans un autre tube-guide de l'assemblage.

Le dispositif représenté sur la figure 13 présente l'avantage d'une très grande simplicité tant en ce qui concerne sa structure que son utilisation. En outre, ce dispositif présente l'avantage de ne pas comporter de moyens moteurs tels que des vérins nécessitant une source d'énergie extérieure.

Le dispositif de pose de manchons de blocage suivant l'invention permet dans tous les cas de réaliser une insertion du manchon dans une position parfaitement contrôlée par des opérations simples puis une extraction de la broche ayant assuré la pose du manchon, sans déplacement de celui-ci à l'intérieur du tube-guide.

L'utilisation d'un dispositif multibroches permet d'effectuer simultanément la pose des vingt-quatre manchons de blocage des tubes-guides d'un assemblage combustible.

L'invention ne se limite pas aux modes de réalisation qui ont été décrits.

On peut imaginer des dispositifs de retenue du manchon sur la broche différents de ceux qui ont été décrits qui sont soit du type entièrement passif (ressorts à lame) soit du type actif nécessitant un moyen de commande (griffes d'accrochage). Dans le cas de l'utilisation de moyens passifs, les forces de retenue du manchon sur la broche doivent être très inférieures aux forces élastiques assurant la retenue du manchon de blocage dans le tube-guide, dans le cas où la butée d'appui constituée par l'anneau de réglage est solidaire de la perche et se trouve soulevée avec celle-ci lors de l'extraction de la broche, après la pose du manchon.

Les ressorts de retenue du manchon sur la broche peuvent être en nombre quelconque. On peut par exemple envisager de ne prévoir qu'un seul ressort, la retenue du manchon étant assurée par rappel de ce manchon contre la surface de la broche suivant une génératrice.

On peut également imaginer d'autres moyens d'extraction de la broche, cette extraction pouvant être effectuée soit lors du levage de la perche dans son ensemble, soit par commande du déplacement d'un organe mobile dans le direction verticale, depuis la surface supérieure de la piscine.

Enfin, le dispositif suivant l'invention peut être utilisé pour la pose de manchons de blocage dans les tubes-guides d'un assemblages combustible d'un réacteur nucléaire à eau d'un type quelconque, comportant un embout démontable.

## Revendications

1. Dispositif de pose d'un manchon de blocage (25) d'un tube-guide (4) dans un embout démontable (5) d'un assemblage combustible d'un réacteur nucléaire à eau, l'assemblage constitué par un faisceau de crayons combustibles parallèles maintenus dans une ossature formée par des tubes-guides (4), des entretoises (3) et deux embouts d'extrémité (5, 6) étant placé sous eau dans une piscine, chacun des tubes-guides (4) en position verticale étant relié de manière démontable à l'embout d'extrémité (5) situé au niveau supérieur de l'assemblage, grâce à une partie d'extrémité (18) du tube-guide (4) déformable radialement et logée dans un trou traversant l'embout supérieur (5) comportant une partie d'accrochage (17) en saillie radiale et recevant un manchon de blocage (25) dans sa partie interne pour réaliser l'expansion radiale et l'accrochage du tube-guide (4), par sa partie d'accrochage (17) dans un élargissement annulaire du trou (11) de l'embout, le dispositif de pose comportant :
- une perche (31, 90, 75) fixée en position verticale à un moyen de manutention et de levage disposé au-dessus de la piscine ayant au moins une partie d'extrémité inférieure (32, 70, 94), ou broche, dont le diamètre est inférieur au diamètre intérieur du manchon de blocage (25),
- un moyen de retenue (48, 53, 98) du manchon de blocage (25) en position engagée sur la broche (32, 70, 94), associé à la broche,
- une portée d'appui (45a, 53, 86, 93) transversale par rapport à l'axe de la broche susceptible de venir en appui sur une partie du manchon de blocage (25, 125, 125') en position engagée sur la broche (32, 70, 94), et
- un moyen de déplacement vertical d'une partie au moins de la perche (31, 75, 90), caractérisé par le fait que le moyen de retenue du manchon de blocage (25) est constitué par au moins un ressort à lame (48, 98) fixé sur la broche (32, 94) dans sa direction axiale, présentant une courbure convexe dirigée vers l'extérieur de la broche, de façon que le diamètre d'un cylindre imaginaire coaxial à la broche (32, 94) enveloppant le ressort soit supérieur au diamètre intérieur du manchon de blocage (25).

2. Dispositif de pose suivant la revendication 1, caractérisé par le fait que le moyen de retenue du manchon de blocage (25) est constitué par trois ressorts à lame fixés à la périphérie de la broche (32, 94), dans des positions situées à 120° les unes des autres autour de l'axe de la broche.

3. Dispositif de pose suivant l'une quelconque des revendications 1 et 2, caractérisé par le fait que la perche (31) est montée coulissante à l'intérieur d'un corps tubulaire (40) comportant des moyens d'appui (38, 45) sur la plaque adaptatrice de l'embout supérieur (5) de l'assemblage, le corps tubulaire (40) et la perche (31) étant reliés par un moyen de déplacement relatif tel qu'un vérin permettant l'extraction de la broche (32) du manchon de blocage (25) après la pose de ce manchon, par déplacement vertical et vers le haut de la perche (31), le corps tubulaire (40) étant en appui sur la plaque adaptatrice (10) de l'assemblage.

4. Dispositif de pose suivant la revendication 3, caractérisé par le fait que le corps tubulaire (40) est susceptible de venir en appui sur la plaque adaptatrice (10), par l'intermédiaire d'un ensemble (33) d'éjection de manchons de blocage.

5. Dispositif de pose suivant la revendication 3, caractérisé par le fait que le corps tubulaire (40) est susceptible de venir en appui sur la plaque adaptatrice (10) par l'intermédiaire d'un anneau de réglage (45) sur lequel est prévue la portée d'appui (45a) du manchon de blocage (25).

6. Dispositif de pose suivant la revendication 1, caractérisée par le fait que la partie inférieure de la perche (75) porte, par l'intermédiaire d'une plaque (73), un ensemble de broches (70) comportant chacune un moyen de retenue d'un manchon de blocage (25), les broches (70) étant fixées sur la plaque (73) dans des positions correspondant aux positions des tubes-guides d'un assemblage combustible et le moyen de retenue de chacune des broches (70) étant constitué par au moins un ressort à lame à courbure convexe fixé sur la surface périphérique de la broche (70).

7. Dispositif de pose suivant la revendication 6, caractérisé par le fait que la perche est constituée de deux parties télescopiques (75, 77), l'une de ces parties (75) portant un vérin (82) dont la tige est reliée à la seconde partie de la perche (77) qui comporte des dispositifs (81) de mise en appui sur la plaque adaptatrice (10) de l'embout supérieur (5) de l'assemblage combustible, la plaque (73) de support des broches (70) étant solidaire de la première partie (75) de la perche.

8. Dispositif de pose suivant la revendication 1, caractérisé par le fait que la broche (94) est montée coulissante dans l'alésage d'un embout tubulaire (92) constituant la partie inférieure de la perche (90) et reliée à un dispositif (99) de déplacement axial commandé à distance.

9. Dispositif de pose suivant la revendication 8, caractérisé par le fait que le dispositif de déplacement axial (99) est constitué par un dispositif à commande manuel du type télécommande à billes.

10. Dispositif de pose suivant l'une quelconque des revendications 1 à 9, caractérisé par le fait qu'il comporte, à proximité immédiate de l'embout (5) sur lequel on réalise la pose du manchon (25), un dispositif (56) d'approvisionnement en manchons de blocage (25).

11. Dispositif de pose suivant la revendication 10, caractérisé par le fait que le dispositif d'approvisionnement (56) comporte :
- une première plaque (57) horizontale et comportant une pluralité de logements (61) de réception de l'extrémité de manchons (25),
- une seconde plaque (58) horizontale placée au-dessus de la plaque (57) avec un certain écartement comportant une pluralité d'ouvertures traversantes (59) dont le diamètre est supérieur au diamètre des manchons (25), disposées dans l'alignement des logements (61) de la plaque (57),
- une troisième plaque (60) montée mobile dans un plan horizontal entre les plaques (57) et (58) et comportant une pluralité d'ouvertures traversantes (62) suivant une disposition identique à celle des ouvertures traversantes (59) de la plaque (58), et
- un moyen (65) de déplacement de la troisième plaque (60) par rapport aux plaques (57) et (58) entre une position d'alignement des ouvertures (59) et (62) et des logements (61) et une position décalée permettant le maintien de manchons (25) placés dans le dispositif d'approvisionnement (56).

12. Dispositif de pose suivant la revendication 11, caractérisé par le fait que les ouvertures (59) et 62) et les logements (61) sont disposés sur des plaques (57, 58, 60) respectivement suivant une disposition reproduisant la disposition transversale des tubes-guides d'un assemblage combustible.

13. Dispositif de pose suivant la revendication 12, caractérisé par le fait que les ouvertures (59) et (62) et les logements (61) sont disposés sur les plaques (57, 59, 60) respectivement suivant plusieurs ensembles reproduisant chacun la disposition transversale des tubes-guides dans un assemblage.

14. Procédé de pose d'un manchon de blocage (25) d'un tube-guide (4) dans un embout démontable (5) d'un assemblage combustible d'un réacteur nucléaire à eau, l'assemblage constitué par un faisceau de crayons combustibles parallèles maintenus dans une ossature formée par des tubes-guides (4), des entretoises (3) et deux embouts d'extrémité (5, 6) étant placé sous eau dans une piscine, chacun des tubes-guides (4) en position verticale étant relié de manière démontable à l'embout d'extrémité (5) situé au niveau supérieur de l'assemblage, grâce à une partie d'extrémité (18) du tube-guide (4) déformable radialement et logée dans un trou traversant l'embout supérieur (5) comportant une partie d'accrochage (17) en saillie radiale et recevant un manchon de blocage (25) dans sa partie interne pour réaliser l'expansion radiale et l'accrochage du tube-guide (4), par sa partie d'accrochage (17) dans un élargissement annulaire du trou (11) de l'embout, caractérisé par le fait :
- qu'on place un dispositif d'approvisionnement en manchons (56) au voisinage immédiat de l'embout démontable (5),
- qu'on réalise le prélèvement d'au moins un manchon de blocage (25) sur le dispositif d'approvisionnement (56), grâce à un dispositif de pose (31) mobile comportant un moyen de retenue (48) d'au moins un manchon disposé sur une partie d'extrémité inférieure (32), du dispositif de pose (31) par engagement dans la direction axiale de la partie d'extrémité (32), à l'intérieur d'un manchon de blocage,
- qu'on effectue la pose du manchon de blocage (25) dans un tube-guide, à l'intérieur de l'embout (5), et
- qu'on extrait la partie inférieure (32) du dispositif de pose (31) du tube-guide (4) et de l'embout (5), le manchon (25) restant à l'intérieur du tube-guide (4) et le dispositif de pose pouvant réaliser le prélèvement d'un nouveau manchon (25) dans le dispositif d'approvisionnement (56) sans être remonté au niveau supérieur de la piscine.

## Patentansprüche

1. Vorrichtung zum Einsetzen einer Blockierhülse (25) eines Führungsrohrs (4) in ein Kopfstück (5) einer zerlegbaren Brennelementkassette eines wassergekühlten Kernreaktors, wobei die aus einem Bündel von parallel in einem Tragwerk aus Führungsrohren (4), Verstrebungen (3) und zwei Kopfstücken (5, 6) gehaltenen Brennstoffstäben gebildete Brennelementkassette unter Wasser in einem Becken angebracht ist, wobei jedes Führungsrohr (4) in vertikaler Stellung lösbar mit dem hochgelegenen Kopfstück (5) der Kassette mit Hilfe eines radial verformbaren und in einem das obere Kopfstück (5) durchquerenden Loch untergebrachten Endstücks (18) des Führungsrohrs (4) verbunden ist, wobei das Endstück einen radial überstehenden Aufhängungsbereich (17) aufweist, der eine Blockierhülse (25) in seinem Innenbereich aufnimmt, um die radiale Ausdehnung und Aufhängung des Führungsrohrs (4) durch seinen Aufhängungsbereich (17) in einer ringförmigen Erweiterung des Loches (11) des Kopfstücks durchzuführen, wobei die Vorrichtung aufweist:
- eine in senkrechter Stellung an einem über dem Becken angebrachten Handhabungs- und Anhebungsmittel befestigte Stange (31, 90, 75), die zumindest einen unteren Endbereich (32, 70, 94) oder Zapfen besitzt, dessen Durchmesser kleiner als der Innendurchmesser der Blockierhülse (25) ist,
- ein mit dem Zapfen (32, 70, 94) verbundenes Haltemittel (48, 53, 98) zum Halten der Blockierhülse auf dem Zapfen.
- einen Anschlag (45a, 53, 86, 93) quer zur Achse des Zapfens, der geeignet ist, auf einen Bereich der auf dem Zapfen (32, 70, 94) sitzenden Blockierhülse (25, 125, 125') zu drücken, und
- ein Mittel zur vertikalen Bewegung zumindest eines Bereichs der Stange (31, 75, 90),
**dadurch gekennzeichnet,**
daß das Mittel zum Halten der Blockierhülse (25) zumindest aus einer auf dem Zapfen (32, 94) in dessen axialer Richtung befestigten Blattfeder (48, 98) besteht, die eine konvexe Krümmung zum Äußeren des Zapfens hin aufweist, so daß der Durchmesser eines imaginären, zum Zapfen (32, 94) koaxialen Zylinders, der die Feder umhüllt, größer als der Innendurchmesser der Blockierhülse (25) ist.

2. Vorrichtung nach Anspruch 1,
dadurch gekennzeichnet,
daß das Haltemittel zum Halten der Blockierhülse (25) aus drei am Rand des Zapfens (32, 94) befestigten Blattfedern besteht, deren Stellungen um die Zapfenachse um 120° gegeneinander versetzt sind,

3. Vorrichtung nach einem der Ansprüche 1 oder 2,
dadurch gekennzeichnet,
daß der Stab (31) verschiebbar im Inneren eines rohrförmigen Körpers (40) angebracht ist, der Mittel (38, 45) zum Abstützen auf der Vorsatzplatte des oberen Kopfstücks (5) der Kassette aufweist, und wobei der rohrförmige Körper (40) und der Stab (31) miteinander über ein Mittel zur relativen Bewegung in der Art eines Stellglieds verbunden sind, das das Herausziehen des Zapfens (32) aus der Blockierhülse (25) nach der Anbringung dieser Hülse durch vertikale Bewegung des Stabs (31) nach oben ermöglicht, während der rohrförmige Körper (40) auf die Vorsatzplatte (10) der Kassette drückt.

4. Vorrichtung nach Anspruch 3,
dadurch gekennzeichnet,
daß der rohrförmige Körper (40) geeignet ist, über eine Anordnung (33) zum Ausstoßen von Blockierhülsen auf die Vorsatzplatte (10) zu drücken.

5. Vorrichtung nach Anspruch 3,
dadurch gekennzeichnet,
daß der rohrförmige Körper (40) geeignet ist, auf die Vorsatzplatte (10) über einen Einstellring (45) zu drücken, an dem der Anschlag (45a) zum Drücken auf die Blockierhülse (25) vorgesehen ist.

6. Vorrichtung nach Anspruch 1,
dadurch gekennzeichnet,
daß der untere Bereich des Stabs (75) mittels einer Platte (73) eine Anordnung von Zapfen (70) trägt, von denen jeder ein Mittel zum Halten einer Blockierhülse (25) aufweist, wobei die Zapfen (70) auf der Platte (73) an Orten, die den Orten der Führungsrohre einer Brennelementkassette entsprechen, befestigt sind und das Haltemittel eines jeden Zapfens aus mindestens einer konvex gekrümmten Blattfeder besteht, die auf der Außenoberfläche des Zapfens (70) befestigt ist.

7. Vorrichtung nach Anspruch 6,
dadurch gekennzeichnet,
daß der Stab aus zwei teleskopischen Bereichen (75, 77) besteht, von denen einer (75) ein Stellglied (82) aufweist, dessen Stab mit dem zweiten Bereich der Stange (77) verbunden ist, der Vorrichtungen (81) zum Andrücken auf der Vorsatzplatte (10) des oberen Kopfstücks (5) der Brennelementkassette aufweist, wobei die die Zapfen (70) tragende Platte (73) mit dem ersten Bereich (75) des Stabs fest verbunden ist.

8. Vorrichtung nach Anspruch 1,
dadurch gekennzeichnet,
daß der Zapfen (94) verschiebbar in der Bohrung eines rohrförmigen Kopfstücks (92) angebracht ist, das den unteren Bereich der Stange (90) bildet und mit einer ferngesteuerten axialen Bewegungsvorrichtung (99) verbunden ist.

9. Vorrichtung nach Anspruch 8,
dadurch gekennzeichnet,
daß die axiale Bewegungsvorrichtung (99) aus einer von Hand gesteuerten Vorrichtung der über Kugeln ferngesteuerten Art gebildet ist.

10. Vorrichtung nach einem der Ansprüche 1 bis 9,
dadurch gekennzeichnet,
daß sie in unmittelbarer Nähe des Kopfstücks (5), an dem die Anbringung der Hülse (25) vorgenommen wird, eine Versorgungsvorrichtung (56) zur Versorgung mit Blockierhülsen (25) umfaßt.

11. Vorrichtung nach Anspruch 10,
dadurch gekennzeichnet,
daß die Versorgungsvorrichtung (56) umfaßt:
- eine erste horizontale Platte (57), die eine Mehrzahl von Aussparungen (61) zur Aufnahme des Endes von Hülsen (25) aufweist,
- eine zweite oberhalb der Platte (57) in einem bestimmten Abstand angebrachte horizontale Platte (58), die eine Mehrzahl durchgehender Öffnungen (59) aufweist, deren Durchmesser größer als der Durchmesser der Hülsen (25) ist, und die fluchtend mit den Aussparungen (61) der Platte (57) angebracht sind,
- eine dritte, beweglich in einer horizontalen Ebene zwischen den Platten (57) und (58) angebrachte Platte (60), die eine Mehrzahl von durchgehenden Öffnungen (62) aufweist, deren Anordnung identisch derjenigen der durchgehenden Öffnungen (59) der Platte (58) ist, und
- ein Mittel (65) zum Bewegen der dritten Platte (60) bezüglich der Platten (57) und (58) zwischen einer fluchtenden Stellung der Öffnungen (59) und (62) und der Aussparungen (61) und einer versetzten Stellung, die das Festhalten der in der Versorgungsvorrichtung (56) angebrachten Hülsen (25) ermöglicht.

12. Vorrichtung nach Anspruch 11,
dadurch gekennzeichnet,
daß die Öffnungen (59) und (62) und die Aussparungen (61) auf den Platten (57, 58, 60) jeweils in einer Anordnung angebracht sind, die die Querschnittsanordnung der Führungsrohre einer Brennelementkassette wiedergibt.

13. Vorrichtung nach Anspruch 12,
dadurch gekennzeichnet,
daß die Öffnungen (59) und (62) und dir Aussparungen (61) auf den Platten (57, 59, 60) jeweils gemäß mehrerer Anordnungen angebracht sind, von denen jede die Querschnittsanordnung der Führungsrohre in einer Brennelementkassette wiedergibt.

14. Verfahren zum Einsetzen einer Blockierhülse (25) eines Führungsrohrs (4) in einem Kopfstück (5) einer zerlegbaren Brennelementkassette eines wassergekühlten Kernreaktors, wobei die aus einem Bündel parallel in einem Tragwerk aus Führungsrohren (4), Verstrebungen (3) und zwei Kopfstücken (5, 6) gehaltenen Brennstoffstäben gebildete Brennelementkassette unter Wasser in einem Becken angebracht ist, wobei jedes Führungsrohr (4) in vertikaler Stellung lösbar mit dem hochgelegenen Kopfstück (5) der Kassette mit Hilfe eines radial verformbaren und in einem das obere Kopfstück (5) durchquerenden Loch untergebrachten Endstücks (18) des Führungsrohrs (4) verbunden ist, wobei das Endstück einen radial überstehenden Aufhängungsbereich (17) aufweist, der eine Blockierhülse (25) in seinem Innenbereich aufnimmt, um die radiale Ausdehnung und Aufhängung des Führungsrohrs (4) durch seinen Aufhängungsbereich (17) in einer ringförmigen Erweiterung des Loches (11) des Kopfstücks durchzuführen,
**dadurch gekennzeichnet,** daß
- eine Hülsenversorgungsvorrichtung (56) in direkte Nähe des zerlegbaren Kopfstücks (5) gebracht wird,
- daß mindestens eine Blockierhülse (25) aus der Versorgungseinrichtung (56) mit Hilfe einer beweglichen Einsetzvorrichtung (31) entnommen wird, die ein an einem unteren Endbereich (32) der Einsetzvorrichtung (31) angeordnetes Haltemittel (48) zum Halten von mindestens einer Hülse durch Eingreifen des Endbereichs (32) in axialer Richtung im Inneren einer Blockierhülse aufweist,
- daß die Blockierhülse (25) in einem Führungsrohr im Inneren des Kopfstücks (5) angebracht wird, und
- daß der untere Bereich (32) der Einsetzvorrichtung (31) aus dem Führungsrohr (4) und dem Kopfstück (5) herausgezogen wird, wobei die Hülse (25) im Inneren des Führungsrohrs (4) verbleibt und die Einsetzvorrichtung eine neue Blockierhülse (25) aus der Versorgungsvorrichtung (56) entnehmen kann, ohne in den oberen Bereich des Beckens angehoben zu werden.

## Claims

1. Device for fitting a blocking sleeve (25) for a guide tube (4) in a removable connector (5) of a fuel assembly in a water-cooled nuclear reactor, the assembly, which consists of a bundle of parallel fuel rods held in a framework formed by guide tubes (4), spacers (3) and two end connectors (5,6), being placed underwater in a pool, each of the guide tubes (4) in the vertical position being removably connected to the end connector (5) located at the upper level of the assembly, by means of a radially deformable end part (18) of the guide tube (4), which is seated in a hole passing through the upper connector (5) and which has a radially projecting securing member (17) and receives a blocking sleeve (25) in its inner part, in order to ensure the radial expansion and securing of the guide tube (4) via its securing member (17) in a annular widening of the hole (11) in the connector, the fitting device comprising:
- a pole (31,90,75) fastened in the vertical position to a handling and lifting means arranged above the pool and having at least one lower end part (32,70,94) or spindle, the diameter of which is less than the internal diameter of the blocking sleeve (25),
- means (48,53,98) for retaining the blocking sleeve (25) in the position of engagement on the spindle (32,70,94) and associated with the spindle,
- a bearing surface (45a,53,86,93) which is transverse relative to the axis of the spindle and capable of coming to bear on part of the blocking sleeve (25,125,125') in the position of engagement of the spindle (32,70,94),
- and means for vertically moving at least part of the pole (31,75,90), characterised in that the retaining means for the blocking sleeve (25) consists of at least one leaf spring (48,98) fastened to the spindle (32,94) in its axial direction and having a convex curvature directed towards the outside of the spindle, in such a way that the diameter of an imaginary cylinder coaxial with the spindle (32,94) and enveloping the spring is greater than the internal diameter of the blocking sleeve (25).

2. Fitting device according to claim 1, characterised in that the means for retaining the blocking sleeve (25) consists of three leaf springs fastened to the periphery of the spindle (32,94) in positions located at 120° relative to one another about the axis of the spindle.

3. Fitting device according to any one of claims 1 and 2, characterised in that the pole (31) is mounted slidably inside a tubular body (40) having means (38,45) for bearing on the adaptor plate of the upper connector (5) of the assembly, the tubular body (40) and the pole (31) being connected by a means of relative movement, such as a jack, allowing the spindle (32) to be extracted from the blocking sleeve (25) after the sleeve has been fitted, as a result of a vertical upward movement of the pole (31), the tubular body (40) bearing on the adaptor plate (10) of the assembly.

4. Fitting device according to claim 3 characterised in that the tubular body (40) is adapted to bear on the adaptor plate (10) by means of a unit (33) for the ejection of blocking sleeves.

5. Fitting device according to claim 3, characterised in that the tubular body (40) is adapted to bear on the adaptor plate (10) by means of an adjusting ring (45), on which is provided the bearing surface (45a) for the blocking sleeve (25).

6. Fitting device according to claim 1, characterised in that the lower part of the pole (75) carries, by means of a plate (73), a set of spindles (70), each having means for retaining a blocking sleeve (25), the spindles (70) being fastened to the plate (73) in positions corresponding to the positions of the guide tubes of a fuel assembly, and the means for retaining each of the spindles (70) consists of at least one convexly curved leaf spring fixed to the peripheral surface of the spindle (70).

7. Fitting device according to claim 6, characterised in that the pole consists of two telescopic parts (75,77), one of these parts (75) carrying a jack (82), the rod of which is connected to the second part of the pole (77) which has means (81) for bearing on the adaptor plate (10) of the upper connector (5) of the fuel asembly, the support plate (73) for the spindles (70) being fixed to the first part (75) of the pole.

8. Fitting device according to claim 1, characterised in that the spindle (94) is slidably mounted in the bore of a tubular connector (92) forming the lower part of the pole (90) and is connected to a device (99) for remote-controlled axial movement.

9. Fitting device according to claim 8, characterised in that the device for axial movement (99) consists of a manually controlled device of the type operated by remote control using ball-bearings.

10. Fitting device according to any one of claims 1 to 9, characterised in that it has, in the immediate vicinity of the connector (5) on which the fitting of the sleeve (25) is carried out, a device (56) for supplying blocking sleeves (25).

11. Fitting device accordingly to claim 10, characterised in the the supply device (56) comprises:
- a horizontal first plate (57) having a plurality of recesses (61) holding the ends of the sleeves (25),
- a horizontal second plate (58) located above the plate (57) at a certain spacing and having a plurality of through-openings (59), the diameter of which is greater than the diameter of the sleeves (25) and which are arranged in alignment with recesses (61) in the plate (57),
- a third plate (60) mounted movably in a horizontal plane between the plates (57) and (58) and having a plurality of through-openings (62) in an arrangement identical to that of the through-openings (59) in the plate (58),
- and means (65) for moving the third plate (60) relative to the plates (57) and (58) between a position of alignment of the openings (59) and (62) and recesses (61) and an offset position enabling the holding of sleeves (25) placed in the supply device (56).

12. Fitting device according to claim 11, characterised in that the openings (59) and (62) and the recesses (61) are arranged on plates (57,58 and 60) respectively in an arrangement reproducing the transverse arrangement of the guide tubes of a fuel assembly.

13. Fitting device according to claim 12, characterised in that the openings (59) and (62) and recesses (61) are arranged on the plates (57,58 and 60) respectively in a plurality of sets, each reproducing the transverse arrangement of the guide tubes in an assembly.

14. Process for fitting a blocking sleeve (25) for a guide tube (4) in a removable connector (5) of a fuel assembly of a water-cooled nuclear reactor, the assembly consisting of a bundle of parallel fuel rods held in a framework formed by guide tubes (4), spacers (3) and two end connectors (5,6), being placed underwater in a pool, each of the guide tubes (4) in the vertical position being removable connected to the end connector (5) located at the upper level of the assembly, by means of a radially deformable end part (18) of the guide tube (4), which is seated in a hole passing through the upper connector (5) and which has a radially projecting securing member (17) and receives a blocking sleeve (25) in its inner part, in order to ensure the radial expansion and securing of the guide tube (4) via its securing member (17) in an annular widening of the hole (11) in the connector, characterised in that
- the means for supplying sleeves (56) is placed in the immediate vicinity of the removable connector (5),
- at least one blocking sleeve (25) is taken from the supply means (56), by a movable fitting device (31) comprising means (48) for holding at least one sleeve placed on a lower end part (32) of the fitting device (31), by engaging in the axial direction of the end part (32) inside a blocking sleeve,
- the blocking sleeve (25) is fitted in a guide tube, inside the connector (5), and
- the lower part (32) of the fitting device (31) is removed from the guide tube (4) and the connector (5), the sleeve (25) remaining inside the guide tube (4) and the fitting device then being able to take another sleeve (25) from the supply means (56) without being brought back to the upper level of the pool.
